# EUROPEAN PATENT APPLICATION

(11) **EP 1 254 876 A2**
(43) Date of publication of application: **06.11.2002**
(21) Application number: 02076718.2
(22) Date of filing: 01.05.2002
(51) Int. Cl.: C05F 3/00, C05F 3/06

(54) **Method and device for processing liquid manure**

(30) Priority: 03.05.2001 BE 200100308
(71) Applicant: Trevi, Naamloze Vennootschap, 8930 Menen (BE)
(72) Inventor: Deboosere, Stefaan, B-9000 Gent (BE)
(74) Representative: Donné, Eddy

(57) **Abstract**

The invention relates to a method for processing liquid manure, which is collected below the floor of a stable (1) and which, outside the stable (1), is mechanically separated into a thick fraction (4) and a thin fraction (3), whereby the thick fraction (4) is dried, characterized in that the thick fraction (4) is dried by directing air in a closed circuit therethrough, whereby in this circuit, the air is cooled down below the dew point, the condensate (17) formed thereby is separated, and the dehumidified air subsequently is heated before it is sent through the thick fraction (4), and the humidity-laden air leaving the thick fraction (4) is circulated through the circuit again.

## Description

This invention relates to a method for processing liquid manure, this is a mixture of urine and faeces, in particular mixed manure or dung-water, which is collected below the floor of a stable and which, outside of the stable, is mechanically separated into a thick fraction and a thin fraction, whereby the thick fraction is dried.

Especially in pig-breeding farms, large quantities of liquid manure are produced in the shape of liquid manure, in particular mixed manure or dung-water. Due to relatively strict reglementations, only a limited amount thereof can be used for fertilizing the fields, such that a large surplus of manure is created which must be processed.

Therefore, this manure must undergo a treatment.

With known methods of the aforementioned kind, the drying of the thick fraction takes place by means of air which is blown one time through or over this latter, which requires relatively much energy and causes hindrance due to bad smell as well as air pollution.

An important problem thereby is especially the emission of ammonia by the liquid manure. This emission into the environment must be kept as low as possible. Due to increasingly strict environmental standards, measures have to be taken in order to keep this emission below a certain level.

The invention aims at providing a method for processing manure which remedies the aforementioned disadvantages and is economical and whereby no hindrance due to bad smell and/or air pollution is caused and in particular the emission of ammonia can be kept low.

To this aim, the thick fraction is dried by directing air in a closed circuit therethrough, whereby in this circuit, the air is cooled down below the dew point, the condensate formed thereby is separated, and the dehumidified air subsequently is heated before it is sent through the thick fraction, and the humidity-laden air leaving the thick fraction is circulated through the circuit again.

As the air flows in a closed circuit, there are practically no emissions, and the hindrance due to bad smell will be limited. Energetically, said manner of drying is advantageous.

EP-A-0.498.084 describes a method for treating manure, whereby the thick fraction also is dried by means of air which is circulated in a closed circuit and, after being used for drying, is dehydrated and subsequently heated again, in order to be re-used afterwards for drying.

According to this method of treatment, the thick fraction, to wit the faeces, however is separated already in the stable from the liquid fraction, this is the urine. To this aim, the stable comprises a perforated floor, beneath which an endless conveyor of filter cloth or a chain conveyor is situated which lets the urine pass, but carries off the faeces. The urine is treated in an aerator, and a part thereof is distributed on the fields, whereas the remainder is concentrated in an evaporator. The concentrate is added to the thick fraction and dried together with it.

In fact, thus no liquid manure is treated, but the urine and the faeces are collected separately. It can not be spoken of a separation, as the two fractions in fact never have been mixed.

The concentration of ammonia in the stable is limited by strongly ventilating this stable.

Of course, the concentration of ammonia in the stable is diminished by the ventilation, however, the ammonia getting into the stable is emitted into the environment by this ventilation, which produces hindrance due to bad smell and/or air pollution.

Moreover, the ventilation air is directed over the collector for the faeces and the urine below the stable's floor in order to pre-dry the faeces and to vaporize a part of the urine, which even increases the hindrance due to bad smell and the emission of ammonia in the environment.

For separating the faeces and the urine beneath the perforated floor in the stable, a relatively expensive installation is necessary, which moreover can not be built-in in many existing stables. When performing the separation outside of the stable, one separator suffices for a production originating from approximately hundred stables, which renders this solution much more economic.

By applying the method according to the invention, the stable equipment may be less expensive, as no endless conveyor is necessary. Moreover, the ventilation air is not passing through the manure, such that less ammonia gets into this ventilation air, as a result of which the emission towards the environment will be considerably lower.

DE-A-41 21 223 describes the drying of a solid fraction by means of air circulating in a closed circuit, which air, after having been directed through the dry fraction, is cooled, such that moisture condensates, and is reheated. The solid fraction, however, is no manure fraction, but the solid fraction of slurry, whereby the problem of the emission of ammonia is not considered in this document.

According to the invention, preferably the thin fraction is clarified by means of a biological clarification which comprises an aerobic nitrification step and a denitrification step.

According to the method described in document EP-A-0.498.084, the urine is subjected to an aeration, either with or without a nitrification, before being treated in an evaporator. Due to the absence of a denitrification step, this treatment either leads to high emissions of ammonia, and/or to high concentrations of nitrite and/or nitrate. In the first case, again air pollution and hindrance due to bad smell will have to be fought, and in the second case the problem of the fertilizing value remains unsolved. For finally reducing the fertilizing value, a humidifier must be topped, which again renders the solution more expensive in comparison to the invention. Even with the humidifier, it can be stated that the total fertilizing value finally does not diminish, as the concentrate finally is added to the thick fraction.

In another form of embodiment of the method, the thin fraction, instead of being clarified biologically, can be clarified by filtration, in particular ultrafiltration and/or reversed osmosis.

According to the invention, the thick fraction, after drying by means of the air circulating in closed circuit, can be post-heated.

This allows to ensure that the dried thick fraction fulfills the possibly required sanitary quality standards, if these standards have not been reached by the drying itself.

To this aim, after drying with dehumidified air until the moisture content of the thick fraction has dropped to a certain level, the cooling of the air circulated in closed circuit can be stopped and the air can be further circulated in the same circuit, during which it is additionally heated by means of a heating device present in the circuit.

Preferably, the condensate is clarified.

The clarification may be performed by a biological clarification or by a filtration, in particular an ultrafiltration and/or reversed osmosis.

Possibly, the condensate to this aim may be added to the thin fraction, such that the condensate and the thin fraction are clarified simultaneously.

The invention also relates to a device, suitable for applying the method for processing manure according to any of the forms of embodiment described in the aforegoing.

The invention thus relates to a device processing liquid manure, in particular mixed manure or dung-water, which device comprises a mechanical separation device for separating the liquid manure into a thick fraction and a thin fraction, a clarification device for clarifying the thin fraction, and a cold drying device for drying the thick fraction, which drying device comprises a closed air circuit in which a drying tank for the substance to be dried, a cold source for cooling the air below its dew point and a heat source for heating the cooled air are arranged, and which comprises means for separating the moisture, condensated from the air by cooling, from the air, whereby the clarification device is a biological clarification device with a nitrification basin and a denitrification basin or a filtration unit.

The drying device may comprise a fan in the air circuit.

The device for processing liquid manure preferably comprises a clarification device for clarifying the condensate from the drying device.

With the intention of better showing the characteristics of the invention, hereafter, as an example without any limitative character, several preferred forms of embodiment of a method and device for processing liquid manure according to the invention are described, with reference to the accompanying drawings, wherein:
Figure 1 represents a block diagram of a device for applying the method according to the invention;
Figure 2 schematically represents a cold drying device from the device according to figure 1;
Figure 3 represents a block diagram of a device analogous to that of figure 1, however, relating to another form of embodiment of the invention;
Figure 4 schematically represents a biological clarification device from the device according to figure 3.

For processing, according to the invention, liquid manure, collected beneath the perforated floor of a pigsty 1, this manure, outside of the stable 1, first is separated in a mechanical separation device 2 into a thin fraction 3 and a thick fraction 4.

The separation device 2 may be a screw press or a centrifuge, either with or without the addition of a dose of polymers, and the volume distribution is, for example, 85 volume% of thin fraction 3 for 15 volume% of thick fraction 4.

The thick fraction 4, with a dry matter content of, for example, approximately 30 to 35%, then is dried in a so-called cold drying device 5, this is a device in which the thick fraction 4 is dried by means of dry air which has been dried by first being cooled and, after the separation of the condensed moisture or condensate, being heated.

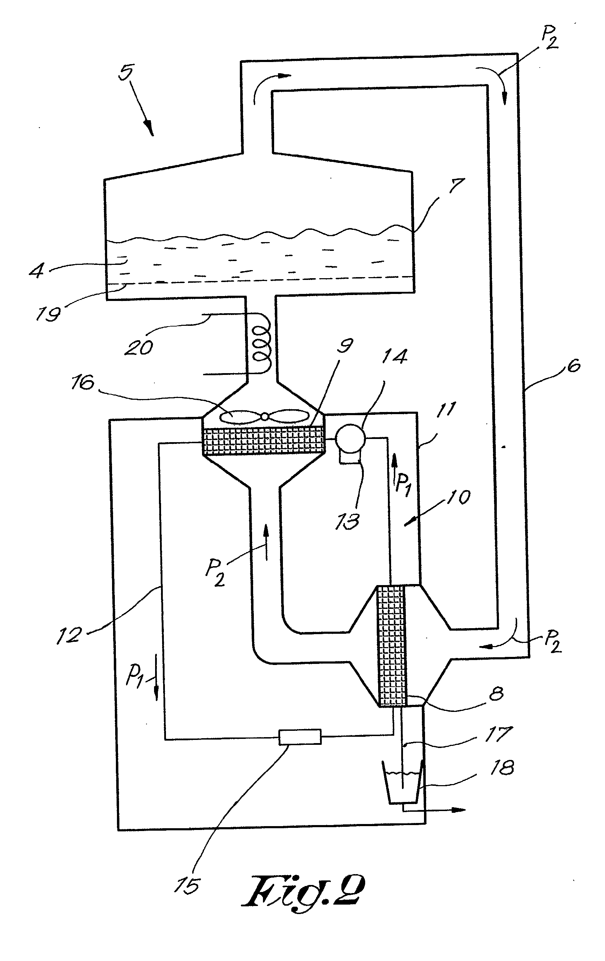

As represented in figure 2, such cold drying device 5 comprises a closed air circuit 6 in which successively a drying tank 7, the evaporator 8 and the condensor 9 of a cooling device 10 are arranged. The drying tank 7 may be filled and emptied in a continuous manner, for example by means of transport conveyors, as well as in a discontinuous manner.

This cooling device 10 is arranged in a housing 11 and comprises a closed circuit 12, through which a cooling medium, such as a freon, flows in the direction indicated by arrows P1.

Seen in flow direction, in the circuit 12 between the evaporator 8 and the condensor 9, a compressor 14 driven by a motor 13 is arranged, whereas an expansion element 15 is provided between the condensor 9 and the evaporator 8.

Air is continuously directed through the air circuit 6, in the direction indicated by P2 in figure 2, by means of a fan 16 arranged, for example, after the condensor 9.

This air is cooled down below its dew point by the evaporator 8, as a result of which moisture present in the air condenses. This ammonia-laden condensate 17 is separated from the air by gravity and is collected in a collecting device 18, from which it is carried off, for example, to a clarification device or a filtration unit. This ammonia is accumulated in the condensate.

Subsequently, the dehumidified air is heated by the condensor 9, and the dry warm air is blown through the thick fraction 4 which is lying upon a grid 19 in the drying tank 7, where it is saturated with moisture before flowing back to the evaporator 8.

As the thick fraction 4 becomes thicker, its temperature will rise, too.

When the thick fraction 4 is sufficiently dried, for example, reaches a dry matter content of approximately 70% to 90%, this fraction is removed from the drying tank 7.

This dried fraction then can be used as dried manure.

It is possible that for certain thick fractions 4, the temperature thereof during drying does not rise sufficiently high in order to kill enough germs, to obtain that this fraction 4 complies with possible sanitary quality standards.

In this case, the fraction 4 can be post-heated by hot air.

If, due to the drying, the temperature of the fraction 4 rises up to, for example, 50°C, then, by post-heating, for example, during approximately 1 hour, this fraction 4 can be brought to approximately 70°C.

To this aim, the cooling device 10 is stopped and, by the fan 16, air is circulated in the air circuit 6, which air is heated by a heating element 20, for example, an electric heating resistor or another heat source.

As the air, before drying, circulates in a closed circuit 6, emissions during drying are practically nihil. Energetically, drying in the drying device 5 is efficient. Per liter of removed water, the power consumption only is approximately 300 Watt, whereby the limited consumption of the fan 16 must be added, too.

The air used for the cold drying of the thick fraction 4 must not necessarily be freed of moisture and be heated by means of a cooling device 10.

In a variant, this cooling device 10 is omitted, and the evaporator 8 and the condensor 9, respectively, are replaced by another cold source, for example, a part of a heat exchanger through which cold water is flowing, and another heat source, for example, a part of a heat exchanger through which hot gasses of an oven are flowing.

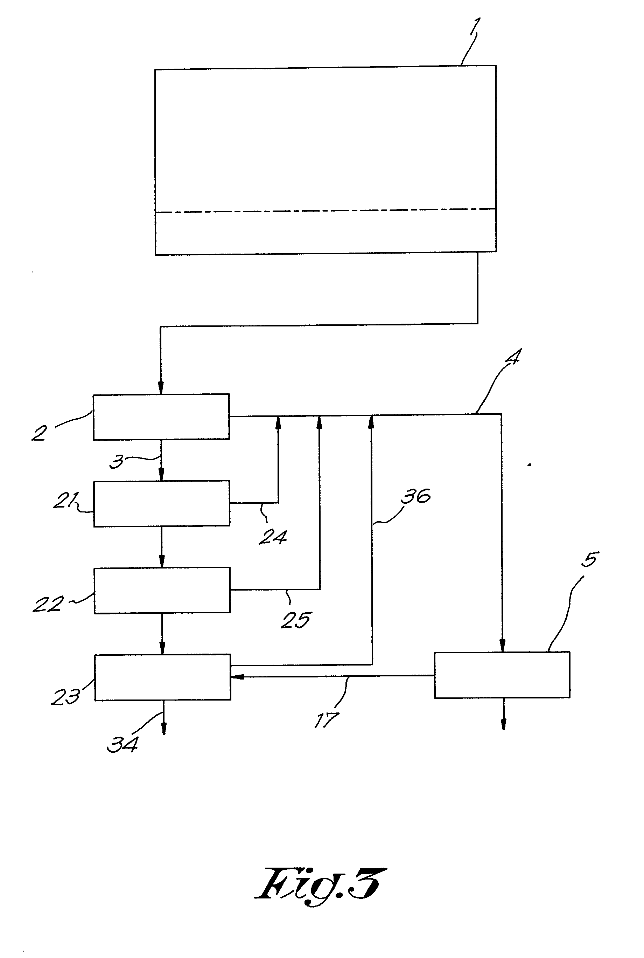

The form of embodiment represented in the block diagram of figure 3, substantially differs from the form of embodiment described in the aforegoing in that also the thin fraction 3 is processed.

The thin fraction 3 is fed, through a buffer tank 21 and a sieve elbow 22, towards a biological clarification device 23.

In the buffer tank 21, a precipitation of solid particles takes place, and the thus formed deposit 24 is added to the aforementioned thick fraction 4. In a variant, this deposit is added to the liquid manure from the stable 1.

In the sieve elbow 22, a fraction 25 is sifted out which also is added to the thick fraction 4 or to the liquid manure from the stable 1.

In the biological clarification device 23, the remaining thin fraction 3 first is subjected to an aerobic nitrification step, followed by a denitrification step.

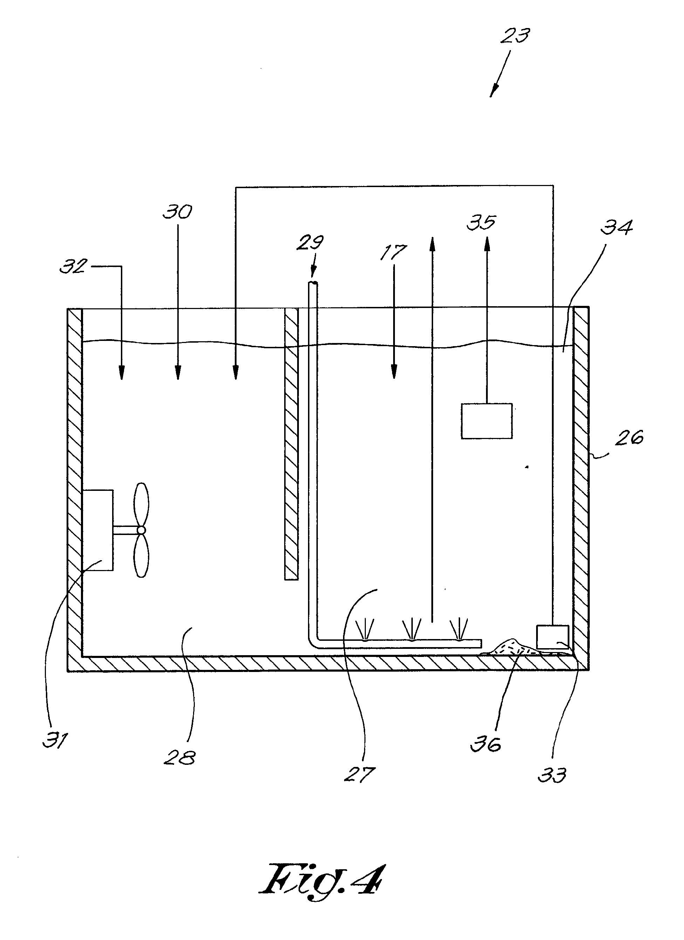

To this aim, this clarification device 24, as represented in figure 4, consists of a reactor 26 which is divided into two compartments 27 and 28 which are in connection with each other at the bottom.

The compartment 27 forms a nitrification basin in which the nitrogen present in the thin fraction 3 first is ammonified and subsequently is nitrified in two steps, by micro-organisms, for example, successively by Nitrosomonas and by Nitrobacter species, in the presence of oxygen, which is supplied by means of an aeration system 29.

The compartment 28 forms a denitrification basin in which, by diverse heterotrophic micro-organisms, in the absence of oxygen and in the presence of sufficient carbon from a carbon source 30, such as, for example, methanol or the carbon compounds present in the thin fraction 3, the nitrogen of the nitrite and nitrate is conversed into harmless nitrogen gas. The biological slurry is kept in suspension by a mixer 31.

The thin fraction 3 in fact is added to the compartment 28 through inlet 32 and thus flows towards the compartment 27, from which it is fed by means of a return pump 33, together with biological slurry, back to the compartment 28.

After a certain period of time, the aeration is stopped and the biologically active slurry will precipitate. The clarified effluent 34 is pumped off from the compartment 27 through conduit 35. This effluent 34 is a low-phosphorous and low-nitrogen manure and can be spread as manure on the fields.

The deposit or slurry 36 from compartment 27 is added to the thick fraction 4, or in a variant to the liquid manure from the stable 1. Phosphorus and kalium present in the manure have accumulated in the biological slurry and thus partially are separated from the thin fraction 3.

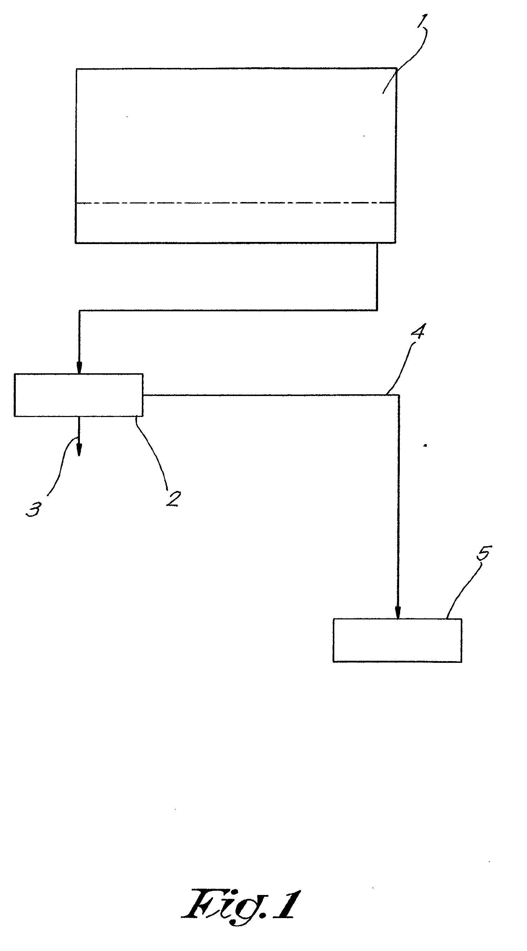

The thick fraction 4, to which possibly the small quantities of deposit 24, sifted fraction 25 and slurry 36 have been added, then is dried in the cold drying device 5, as described heretofore in relation to the form of embodiment according to figures 1 and 2.

If the condensate 17 must be clarified, then it may be added, as represented in figure 3, to the clarification device 23 in order to be clarified biologically together with the thin fraction 3.

Of course, the condensate 17 also can be clarified separately and/or in other ways, such as by filtration, for example, ultrafiltration or reversed osmosis.

The invention will be further specified by means of a practical example:

The pigsty 1 produces 1 ton of mixed manure per day, with a dry matter content of approximately 9%.

This mixed manure was separated daily in a screw press into 0.85 tons of thin fraction 3 and 0.15 tons of thick fraction 4 with a dry matter content of approximately 30%.

Subsequently, the thin fraction 3 has been stocked temporarily in the buffer tank 21.

From there, the thin fraction 3 was pumped through the sieve elbow 22 towards the biological clarification device 23 with a treatment with Nitrosomonas and Nitrobacter species, whereas, by a mat aeration with fine bubbles, air under pressure is blown in, in function of the oxygen contents in the compartment 27. For the denitrification, a quantity of methanol was added to the compartment 28 by means of a dosing pump.

During the biological clarification, molecular nitrogen gas escapes. Up to 90% of the nitrogen present in the thin fraction 3 thus is removed.

The clarified effluent 34 was 0.915 tons and did comprise approximately 6.7 g/l of dry matter, and, after being pumped out of the clarification device 23, it could be spread on the fields in quantities which, according to the case, were up to 160 tons/ha and more.

The thick fraction 4 and the small quantities of deposit 24 of the buffer tank 21, the sifted fraction 25 from the sieve elbow 22 and the slurry 36 from the clarification device 23 were dried in the drying device described in the aforegoing and represented in figure 2, up to a dry matter content of approximately 70%.

0.085 tons of dried manure were obtained.

The method is efficient and economical and causes a minimum of environmental hindrance.

It is clear that the method is not exclusively applicable to pigs' manure. Manure of other animals also can be treated.

Possibly, the condensate 17 is clarified, for example, biologically or by filtration techniques.

The invention is in no way limited to the forms of embodiment described heretofore and represented in the figures; on the contrary may such method for processing manure and the device used therewith be realized in different variants, without leaving the scope of the invention.

## Claims

1. Method for processing liquid manure, this is a mixture of urine and faeces, in particular mixed manure or dung-water, which is collected below the floor of a stable (1) and which, outside the stable (1), is mechanically separated into a thick fraction (4) and a thin fraction (3), whereby the thick fraction (4) is dried, **characterized in that** the thick fraction (4) is dried by directing air in a closed circuit therethrough, whereby in this circuit, the air is cooled down below the dew point, the condensate (17) formed thereby is separated, and the dehumidified air subsequently is heated before it is sent through the thick fraction (4), and the humidity-laden air leaving the thick fraction (4) is circulated through the circuit again.

2. Method according to claim 1, **characterized in that** the thin fraction (3) is clarified by means of a biological clarification which comprises an aerobic nitrification step and a denitrification step.

3. Method according to claim 1, **characterized in that** the thin fraction (3) is clarified by filtration, in particular ultrafiltration and/or reversed osmosis.

4. Method according to any of the preceding claims, **characterized in that** the thick fraction (4), after drying, is post-heated by means of the air circulating in closed circuit.

5. Method according to claim 4, **characterized in that**, after drying by dehumidified air until the humidity content of the thick fraction (4) has dropped to a certain level, the cooling of the air circulated in closed circuit is stopped and the air is further circulated in the same circuit, whereas it is heated additionally by means of a heating device (20) present in the circuit.

6. Method according to any of the preceding claims, **characterized in that** the condensate (17) is clarified.

7. Method according to claim 6, **characterized in that** the clarification of the condensate (17) is performed by means of a biological clarification or by filtration, in particular an ultrafiltration and/or reversed osmosis.

8. Method according to claim 2 or 3 and according to claim 7, **characterized in that** the condensate (17) is added to the thin fraction (3), such that the condensate (17) and the thin fraction (3) are clarified simultaneously.

9. Method according to claim 2 or 3, **characterized in that**, before the thick fraction (4) is dried, the slurry (36) of the clarification is added to this manure, and possibly the deposit of a buffer tank (21), in which the thin fraction (3) has been stored before clarification, and/or a sifted fraction (25) from a sieve treatment of the thin fraction (3).

10. Method according to claim 2 or 3, **characterized in that**, before separating the mixed manure from the stable (1), the slurry (36) of the clarification is added thereto, and possibly the deposit (24) of a buffer tank (21) in which the thin fraction (3) has been stored before clarification, and/or a sifted fraction (25) from a sieve treatment of the thin fraction (3).

11. Device for processing liquid manure, which device comprises a mechanical separation device (2) for separating the liquid manure into a thick fraction (4) and a thin fraction (3), a clarification device (23) for clarifying the thin fraction (3), and a cold drying device (5) for drying the thick fraction (4), which drying device (5) comprises a closed air circuit (6) in which a drying tank (7) for the substance to be dried, a cold source (8) for cooling the air below its dew point and a heat source (9) for heating the cooled air are arranged, and which comprises means for separating the moisture, condensated from the air by cooling, from the air, **characterized in that** the clarification device is a biological clarification device (23) with a nitrification basin and a denitrification basin.

12. Device for processing liquid manure, which device comprises a mechanical separation device (2) for separating the liquid manure into a thick fraction (4) and a thin fraction (3), a clarification device (23) for clarifying the thin fraction (3), and a cold drying device (5) for drying the thick fraction (4), which drying device (5) comprises a closed air circuit (6) in which a drying tank (7) for the substance to be dried, a cold source (8) for cooling the air below its dew point and a heat source (9) for heating the cooled air are arranged, and which comprises means for separating the moisture, condensated from the air by cooling, from the air, **characterized in that** the clarification device is a filtration unit.

13. Device according to claim 11 or 12, **characterized in that** the cold source and the heat source of the drying device (5) are the evaporator (8) and the condensor (9), respectively, of a cooling device (10).

14. Device according to any of the claims 11 to 13, **characterized in that** the drying device (5), apart of the heat source, comprises an additional heating element (16) in the air circuit (6).

15. Device according to any of the claims 11 to 14, **characterized in that** it comprises a clarification device (23) for clarifying the condensate (17) of the drying device (5).

16. Device according to claim 15, **characterized in that** the clarification device (5) is a biological clarification device or a filtration unit.
